(19) Europäisches Patentamt
European Patent Office
Office européen des brevets

(11) EP 4 664 740 A1

(12) EUROPEAN PATENT APPLICATION

(43) Date of publication:
17.12.2025 Bulletin 2025/51

(21) Application number: 25182708.5

(22) Date of filing: 13.06.2025

(51) International Patent Classification (IPC):
H02M 1/00 (2006.01)    H02M 1/10 (2006.01)
H02M 1/14 (2006.01)    H02M 1/15 (2006.01)
H02M 3/00 (2006.01)    H02M 3/335 (2006.01)

(52) Cooperative Patent Classification (CPC):
H02M 1/007; H02M 1/10; H02M 1/14; H02M 1/15;
H02M 3/01; H02M 3/33573; H02M 3/33584

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 13.06.2024 US 202463659558 P

(71) Applicant: Delta Electronics, Inc.
Neihu, Taipei 11491 (TW)

(72) Inventors:
• Kumar, Misha
Morrisville, NC 27560 (US)
• Barbosa, Peter Mantovanelli
Morrisville, NC 27560 (US)

(74) Representative: Uexküll & Stolberg
Partnerschaft von
Patent- und Rechtsanwälten mbB
Beselerstraße 4
22607 Hamburg (DE)

(54) THREE-PHASE SINGLE-STAGE POWER SUPPLY

(57) A three-phase single-stage power supply (3) includes a positive output terminal, a negative output terminal, a first single-stage conversion module (3a), a second single-stage conversion module (3b), and a third single-stage conversion module (3c). Output terminals of the first single-stage conversion module (3a), the second single-stage conversion module (3b) and the third single-stage conversion module (3c) are connected in parallel between the positive output terminal and the negative output terminal. The third single-stage conversion module (3c) includes a third transformer ($T_3$), a third output rectifier circuit (34c), a relay ($R_{1a}$), an auxiliary inductor ($L_a$) and an auxiliary capacitor ($C_a$). The third rectifier circuit (34c) includes a fifth switch circuit and a sixth switch circuit, which includes two switches ($S_9$, $S_{10}$, $S_{11}$, $S_{12}$) connected in series, respectively, and the relay ($R_{1a}$), the auxiliary inductor ($L_a$) and the auxiliary capacitor ($C_a$) are connected in series between a midpoint of the two switches ($S_{11}$, $S_{12}$) in the sixth switch circuit and the negative output terminal, to be served as a buck/boost converter.

FIG. 3A

EP 4 664 740 A1

**Description**

FIELD OF THE INVENTION

The present disclosure relates to the field of power supply, and more particularly to a three-phase single-stage power supply.

BACKGROUND OF THE INVENTION

A power supply may generally convert the alternating current (AC), such as from the grid, to the direct current (DC). A power supply with two stage circuit topology may use a power factor correction (PFC) converter as the first stage to convert the AC voltage into a first DC voltage, and use a DC-DC converter as the second stage to convert the first DC voltage into the second DC voltage with desired voltage level. Generally, the power factor correction refers to making the line current follow the shape of the line voltage. A PFC converter is configured to perform the power factor correction as well as rectification of an AC input. Generally, a DC-DC converter may include a DC-AC converter, a transformer and an AC-DC converter. The DC-AC converter converts the DC voltage into the AC voltage. The transformer is configured to pass the AC signal from a primary side by electromagnetic induction to a secondary side of the transformer. The AC-DC converter on the secondary side of the transformer is configured to convert the AC voltage into a DC voltage with desired voltage level at the output terminal of the DC-DC converter. A bidirectional power supply refers to one that facilitates both AC to DC and DC to AC conversion.

Typically, a three-phase single-stage power supply with balanced three-phase input voltage has relatively small low frequency (e.g., 100 Hz or 120Hz) output voltage and current ripple because of the 120-degree phase-shift between the two consecutive phases of the three-phase input voltage. However, in some applications, if the three-phase single-stage power supply is operated with the single-phase input source, then, the low frequency (e.g., 100Hz or 120Hz) output voltage and current ripple becomes significantly large which is not desirable for some loads, for example, for battery loads.

Moreover, if the three-phase single-stage power supply operates with unbalanced three-phase input voltage, the low frequency (e.g., 100Hz or 120Hz) output voltage and current ripple also becomes significantly large which is not desirable for some loads. This is because, in unbalanced three-phase input voltage, the three voltages have different rms values and/or the consecutive phases are not 120-degree phase-shifted. The above-mentioned situation is not desirable for some loads.

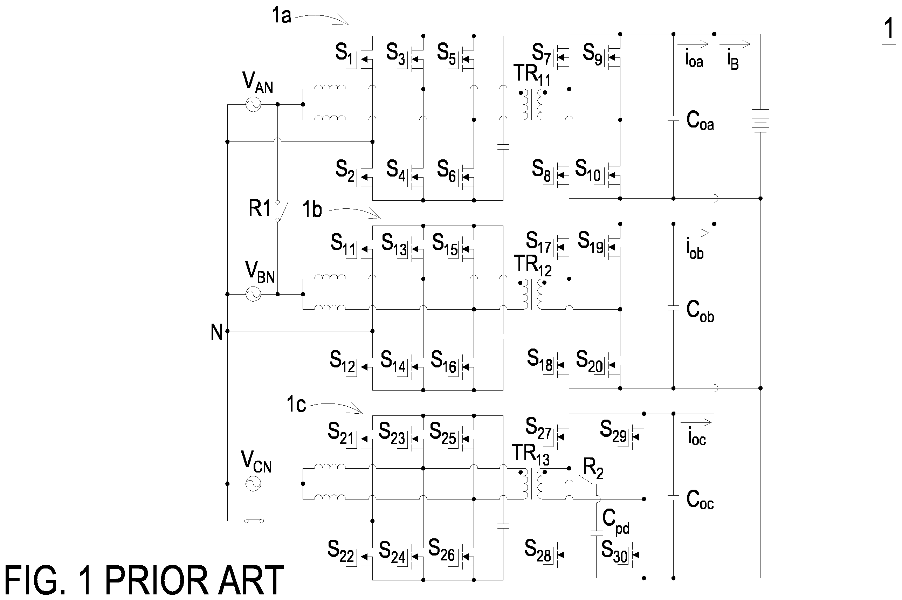

FIG. 1 is a schematic circuit diagram illustrating a conventional three-phase single-stage power supply according to the prior art. As shown in FIG. 1, the conventional three-phase single-stage power supply 1 includes a first single-stage conversion module 1a, a second single-stage conversion module 1b and a third single-stage conversion module 1c. A single-phase input voltage or a three-phase input voltage is received by the first single-stage conversion module 1a, the second single-stage conversion module 1b and the third single-stage conversion module 1c. The first single-stage conversion module 1a, the second single-stage conversion module 1b and the third single-stage conversion module 1c have similar circuit topologies. The first single-stage conversion module 1a includes a plurality of switches $S_1$, $S_2$, $S_3$, $S_4$, $S_5$, $S_6$, $S_7$, $S_8$, $S_9$, $S_{10}$, a first transformer $TR_{11}$ and an output capacitor $C_{oa}$. The second single-stage conversion module 1b includes a plurality of switches $S_{11}$, $S_{12}$, $S_{13}$, $S_{14}$, $S_{15}$, $S_{16}$, $S_{17}$, $S_{18}$, $S_{19}$, $S_{20}$, a second transformer $TR_{12}$ and an output capacitor $C_{ob}$. The third single-stage conversion module 1c includes a plurality of switches $S_{21}$, $S_{22}$, $S_{23}$, $S_{24}$, $S_{25}$, $S_{26}$, $S_{27}$, $S_{28}$, $S_{29}$, $S_{30}$, a third transformer $TR_{13}$ and an output capacitor $C_{oc}$. In addition, the three-phase single-stage power supply 1 further includes a first relay $R_1$. The first relay $R_1$ is electrically connected between an input terminal of the first single-stage conversion module 1a and an input terminal of the second single-stage conversion module 1b. Moreover, the third single-stage conversion module 1c further includes a second relay $R_2$ and a decoupling capacitor $C_{pd}$. The second relay $R_2$ and the decoupling capacitor $C_{pd}$ are electrically connected to a secondary side of a transformer $TR_{13}$ in the third single-stage conversion module 1c.

When the three-phase single-stage power supply 1 operates with the single-phase input voltage, the first relay $R_1$ and the second relay $R_2$ are turned on, and the switches $S_{27}$, $S_{28}$, $S_{29}$, $S_{30}$ disposed at the secondary side of the transformer $TR_{13}$ in the third single-stage conversion module 1c, the decoupling capacitor $C_{pd}$ and the transformer $TR_{13}$ form a buck/boost converter. The buck/boost converter controls the output current $i_{oc}$ of the third single-stage conversion module 1c to be of the opposite phase to the sum of the output current $i_{oa}$ of the first single-stage conversion module 1a and the output current $i_{ob}$ of the second single-stage conversion module 1b. It results in relatively small ripple in the output current is. When the ripple of the output current $i_B$ is greater than zero, the duty cycle of the switches at the secondary side of the third single-stage conversion module 1c is modulated so that the third single-stage conversion module 1c operates as a buck converter to transfer power from the total equivalent capacitor formed by parallel connection of output capacitors $C_{oa}$, $C_{ob}$, and $C_{oc}$ to the decoupling capacitor $C_{pd}$. However, when the ripple of the output current $i_B$ is smaller than zero, the duty cycle of the switches at the secondary side of the third single-stage conversion module 1c is modulated so that the third single-stage conversion module 1c operates as a boost converter to transfer power from capacitor $C_{pd}$ to the total equivalent capacitor formed by parallel connection of output capacitors $C_{oa}$, $C_{ob}$, and $C_{oc}$. In this way, the low frequency output current ripple is reduced when the three-phase single-stage power supply 1 is operated with the single-phase input voltage.

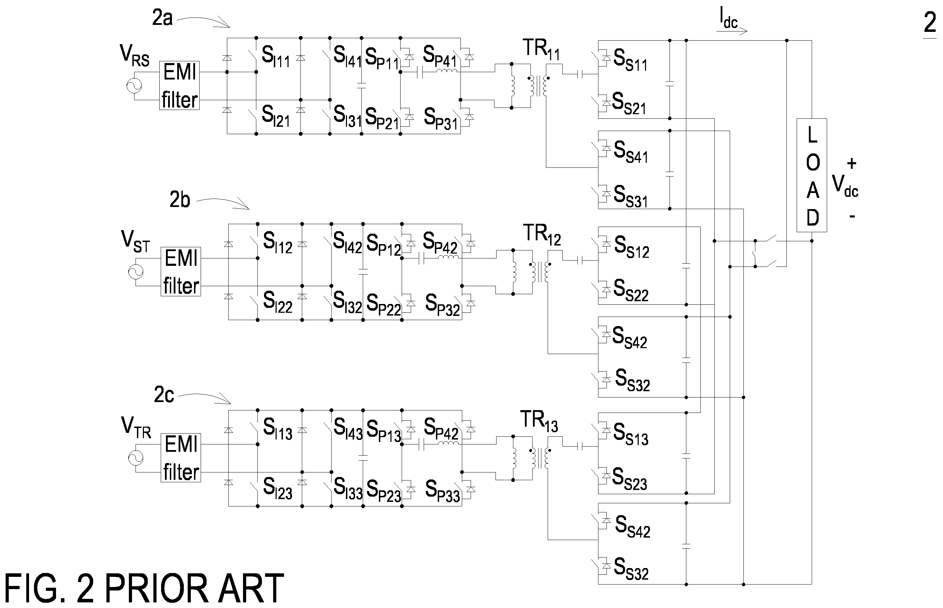

FIG. 2 is a schematic circuit diagram illustrating another conventional three-phase single-stage bidirectional power supply based on LLC resonant converter according to the prior art. As shown in FIG. 2, the conventional three-phase single-stage power supply 2 includes a first single-stage conversion module 2a, a second single-stage conversion module 2b and a third single-stage conversion module 2c. The first single-stage conversion module 2a, the second single-stage conversion module 2b and the third single-stage conversion module 2c have similar circuit topologies. The first single-stage conversion module 2a includes an EMI filter, a plurality of switches $S_{I11}$, $S_{I21}$, $S_{I31}$, $S_{I41}$, $S_{P11}$, $S_{P21}$, $S_{P31}$, $S_{P41}$, $S_{S11}$, $S_{S21}$, $S_{S31}$, $S_{S41}$, a transformer $TR_{11}$ and an output capacitor. The second single-stage conversion module 2b includes an EMI filter, a plurality of switches $S_{I12}$, $S_{I22}$, $S_{I32}$, $S_{I42}$, $S_{P12}$, $S_{P22}$, $S_{P32}$, $S_{P42}$, $S_{S12}$, $S_{S22}$, $S_{S32}$, $S_{S42}$, a transformer $TR_{12}$ and an output capacitor. The third single-stage conversion module 2c includes an EMI filter, a plurality of switches $S_{I13}$, $S_{I23}$, $S_{I33}$, $S_{I43}$, $S_{P13}$, $S_{P23}$, $S_{P33}$, $S_{P43}$, $S_{S13}$, $S_{S23}$, $S_{S33}$, $S_{S43}$, a transformer $TR_{13}$ and an output capacitor. If the three-phase single-stage bidirectional power supply 2 of FIG. 2 operates with balanced three-phase input voltage, the output voltage and current will have relatively small low-frequency peak-peak ripple. However, if three-phase single-stage bidirectional power supply 2 of FIG. 2 operates with single-phase input voltage or with unbalanced three-phase input voltage, the output voltage and current will have relatively large low-frequency peak-peak ripple, which is not desirable for certain types of loads, for example, for battery loads.

Therefore, there is a need of providing a three-phase single-stage power supply to obviate the drawbacks encountered by the prior arts.

SUMMARY OF THE INVENTION

An object of the present disclosure is to provide a three-phase single-stage power supply to address the issues caused by the conventional three-phase single-stage power supply, in which if the three-phase single-stage power supply is operated with the single-phase input voltage or an unbalanced three-phase input voltage, the low frequency (e.g., 100Hz or 120Hz) output voltage and current ripple becomes significantly large which is not desirable for some loads.

In accordance with an aspect of the present disclosure, a three-phase single-stage power supply is provided and includes a positive output terminal, a negative output terminal, a first single-stage conversion module, a second single-stage conversion module and a third single-stage conversion module. An output terminal of the first single-stage conversion module, an output terminal of the second single-stage conversion module and an output terminal of the third single-stage conversion module are connected in parallel between the positive output terminal and the negative output terminal. The third single-stage conversion module includes a third transformer, a third output rectifier circuit, a relay, an auxiliary inductor and an auxiliary capacitor, wherein the third output rectifier circuit includes a fifth switch circuit and a sixth switch circuit, the fifth switch circuit and the sixth switch circuit includes two switches connected in series, respectively, and the relay, the auxiliary inductor and the auxiliary capacitor are connected in series between a midpoint of the two switches of the sixth switch circuit and the negative output terminal, so that the third single-stage conversion module is served as a buck/boost converter.

In accordance with another aspect of the present disclosure, a three-phase single-stage power supply is provided and includes a positive output terminal, a negative output terminal, a first single-stage conversion module, a second single-stage conversion module and a third single-stage conversion module. An output terminal of the first single-stage conversion module, an output terminal of the second single-stage conversion module and an output terminal of the third single-stage conversion module are connected in parallel between the positive output terminal and the negative output terminal. The third single-stage conversion module includes an input rectifier circuit, a third inverter circuit, a third LLC resonant circuit, a DC blocking capacitor, a resonant capacitor, a third transformer, a third output rectifier circuit, a first relay, a first auxiliary capacitor, a second relay and a second auxiliary capacitor. The third output rectifier circuit includes a fifth switch circuit and a sixth switch circuit, the fifth switch circuit and the sixth switch circuit includes two switches connected in series, respectively, the DC blocking capacitor is electrically connected between a secondary winding of the third transformer and a midpoint of the two switches of the fifth switch circuit, a resonant capacitor of the third LLC resonant circuit is electrically connected between the third inverter circuit and a primary winding of the third transformer, the first relay is connected in series with the first auxiliary capacitor and then connected in parallel with the resonant capacitor, and the second relay is connected in series with the second auxiliary capacitor and then connected in parallel with the DC blocking capacitor, so that the third single-stage conversion module is served as a buck/boost converter.

In accordance with a further aspect of the present disclosure, a three-phase single-stage power supply is provided and includes a positive output terminal, a negative output terminal, a first single-stage conversion module, a second single-stage conversion module and a third single-stage conversion module. An output terminal of the first single-stage conversion module, an output terminal of the second single-stage conversion module and an output terminal of the third single-stage conversion module are connected in parallel between the positive output terminal and the negative output terminal. The third single-stage conversion module includes an input rectifier circuit, a third input filter circuit, a third LLC resonant circuit, a first relay and an auxiliary capacitor, wherein the first relay and the auxiliary capacitor are connected in series and then connected in parallel with the third input filter circuit.

BRIEF DESCRIPTION OF THE DRAWINGS

FIG. 1 is a schematic circuit diagram illustrating a conventional three-phase single-stage power supply according to the prior art;
FIG. 2 is a schematic circuit diagram illustrating another conventional three-phase single-stage bidirectional power supply based on LLC resonant converter according to the prior art;
FIG. 3A is a schematic circuit diagram illustrating a three-phase single-stage power supply according to a first embodiment of the present disclosure;
FIG. 3B is a control block diagram of the third single-stage conversion module in the three-phase single-stage power supply of FIG. 3A;
FIG. 4 is a schematic circuit diagram illustrating a three-phase single-stage power supply according to a second embodiment of the present disclosure;
FIG. 5A is a schematic circuit diagram illustrating a three-phase single-stage power supply according to a third embodiment of the present disclosure;
FIG. 5B is a control block diagram of the third single-stage conversion module in the three-phase single-stage power supply of FIG. 5A;
FIG. 5C is a schematic diagram illustrating the steps of the control method of the third single-stage conversion module of the three-phase single-stage power supply shown in FIG. 5A;
FIG. 6 is a partial control block diagram of the third single-stage conversion module of the three-phase single-stage power supply shown in FIG. 2 when the three-phase single-stage power supply is operated with an unbalanced three-phase input voltage; and
FIG. 7 is a key simulation waveform illustrating the three-phase single-stage power supply shown in FIG. 2.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

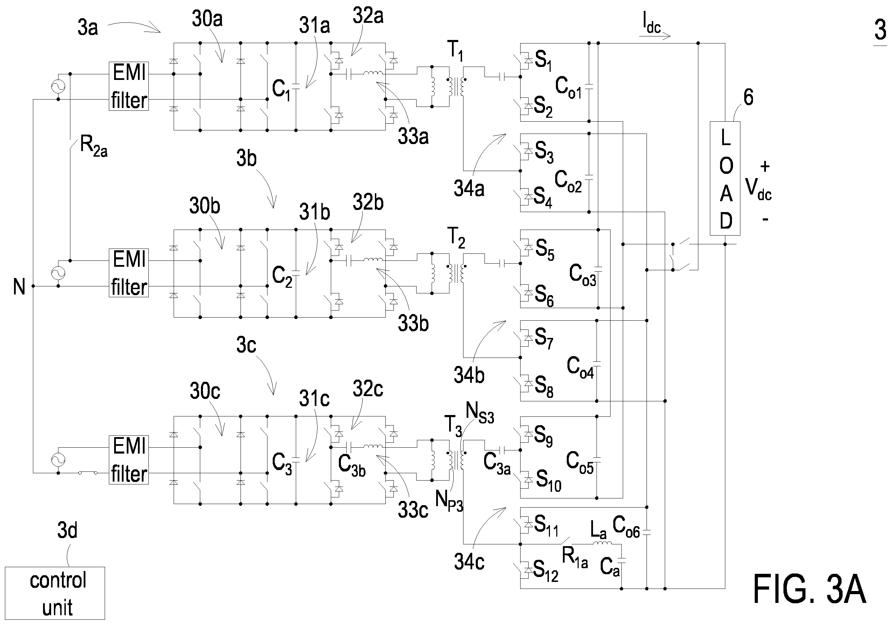

FIG. 3A is a schematic circuit diagram illustrating a three-phase single-stage power supply according to a first embodiment of the present disclosure. As shown in FIG. 3A, in the embodiment, the three-phase single-stage power supply 3 is based on the LLC resonant conversion circuit topology and has a bidirectional power conversion function. In addition, when the three-phase single-stage power supply 3 receives a single-phase input voltage to operate or receives an unbalanced three-phase input voltage, the three-phase single-stage power supply 3 can further compensate for the ripple of the output current/output voltage of the three-phase single-stage power supply 3. The three-phase single-stage power supply 3 includes a positive output terminal, a negative output terminal and three single-stage conversion modules, namely the first single-stage conversion module 3a, the second single-stage conversion module 3b and the third single-stage conversion module 3c. The positive output terminal and the negative output terminal of the three-phase single-stage power supply 3 are electrically connected to the load 6. The output terminals of the first single-stage conversion module 3a, the second single-stage conversion module 3b and the third single-stage conversion module 3c are connected in parallel between the positive output terminal and the negative output terminal. The input terminals of the first single-stage conversion module 3a, the second single-stage conversion module 3b and the third single-stage conversion module 3c are connected in parallel.

The first single-stage conversion module 3a, the second single-stage conversion module 3b and the third single-stage conversion module 3c have similar circuit topologies. In the embodiment, the first single-stage conversion module 3a includes a first input rectifier circuit 30a, a first input filter circuit 31a, a first inverter circuit 32a, a first LLC resonance circuit 33a, a first transformer $T_1$ and a first output rectifier circuit 34a. The second single-stage conversion module 3b includes a second input rectifier circuit 30b, a second input filter circuit 31b, a second inverter circuit 32b, a second LLC resonant circuit 33b, a second transformer $T_2$ and a second output rectifier circuit 34b. The third single-stage conversion module 3c includes a third input rectifier circuit 30c, a third input filter circuit 31c, a third inverter circuit 32c, a third LLC resonance circuit 33c, a third transformer $T_3$ and a third output rectifier circuit 34c. In some embodiments, each of the first single-stage conversion module 3a, the second single-stage conversion module 3b and the third single-stage conversion module 3c includes an EMI filter. The EMI filter of the first single-stage conversion module 3a is connected between the input terminals of the first single-stage conversion module 3a and the first input rectifier circuit 30a. The EMI filter of the second single-stage conversion module 3b is connected between the input terminals of the second single-stage conversion module 3b and the second input rectifier circuit 30b. The EMI filter of the third single-stage conversion module 3c is connected between the input terminals of the third single-stage conversion module 3c and the third input rectifier circuit 30c.

The first input rectifier circuit 30a, the second input rectifier circuit 30b and the third input rectifier circuit 30c are configured to convert the AC input into rectified AC voltage. The first input filter circuit 31a, the second input filter circuit 31b and the third input filter circuit 31c are electrically connected to the first input rectifier circuit 30a, the second input rectifier circuit 30b and the third input rectifier circuit 30c respectively, and are configured to perform filtering of the rectified AC voltage for suppressing high-frequency switching noise. The first inverter circuit 32a, the second inverter circuit 32b and the third inverter circuit 32c are electrically connected to the first input filter circuit 31a, the second input filter circuit 31b and the third input filter circuit 31c respectively, and configured to convert the rectified AC voltage into the high frequency AC voltage. The first LLC resonant circuit 33a is electrically connected between the first inverter circuit 32a and the primary winding of the first transformer $T_1$, the second LLC resonant circuit 33b is electrically connected between the second inverter circuit 32b and the primary winding of the second transformer $T_2$, and the third LLC resonant circuit 33c is electrically connected between the third inverter circuit 32c and the primary winding of the third transformer $T_3$. The first LLC resonant circuit 33a, the second LLC resonant circuit 33b and the third LLC resonant circuit 33c are configured to perform the resonance. The primary winding of the first transformer $T_1$, the primary winding of the second transformer $T_2$ and the primary winding of the third transformer $T_3$ are electrically connected to the first inverter circuit 32a, the second inverter circuit 32b and the third inverter circuit 32c respectively, and are configured to transfer the electric energy of the high frequency AC voltage from the primary winding to the secondary winding. The first output rectifier circuit 34a, the second output rectifier circuit 34b and the third output rectifier circuit 34c are electrically connected to the secondary winding of the first transformer $T_1$, the secondary winding of the second transformer $T_2$ and the secondary winding of the third transformer $T_3$, respectively, and are configured to convert the high frequency AC voltage into the DC voltage with desired voltage level.

In some embodiments, the first input rectifier circuit 30a, the second input rectifier circuit 30b and the third input rectifier circuit 30c include a plurality of switches to form a full-bridge circuit or a half-bridge circuit respectively, but not limited thereto. The first input filter circuit 31a, the second input filter circuit 31b, and the third input filter circuit 31c include an input filter capacitor $C_1$, an input filter capacitor $C_2$, and an input filter capacitor $C_3$, respectively. The first inverter circuit 32a, the second inverter circuit 32b and the third inverter circuit 32c include a plurality of switches to form a full-bridge circuit or a half-bridge circuit respectively, but not limited thereto. Each of the first LLC resonant circuit 33a, the second LLC resonant circuit 33b and the third LLC resonant circuit 33c includes a resonant capacitor, a resonant inductor and a magnetizing inductor.

In some embodiments, the first output rectifier circuit 34a includes a first switch circuit and a second switch circuit. The second output rectifier circuit 34b includes a third switch circuit and a fourth switch circuit. The third output rectifier circuit 34c includes a fifth switch circuit and a sixth switch circuit. The first switch circuit includes a first switch $S_1$ and a second switch $S_2$. The second switch circuit includes a third switch $S_3$ and a fourth switch $S_4$. The third switch circuit includes a fifth switch $S_5$ and a sixth switch $S_6$. The fourth switch circuit includes a seventh switch $S_7$ and an eighth switch $S_8$. The fifth switch circuit includes a ninth switch $S_9$ and a tenth switch $S_{10}$. The sixth switch circuit includes an eleventh switch $S_{11}$ and a twelfth switch $S_{12}$. A first terminal of the first switch $S_1$ is electrically connected to the positive output terminal of the three-phase single-stage power supply 3, a first terminal of the fifth switch $S_5$ and a first terminal of the ninth switch $S_9$. A second terminal of the first switch $S_1$ is electrically connected to a first terminal of the second switch $S_2$. A second terminal of the second switch $S_2$ is electrically connected to a second terminal of the sixth switch $S_6$ and a second terminal of the tenth switch $S_{10}$. A first terminal of the third switch $S_3$ is electrically connected to a first terminal of the seventh switch $S_7$ and a first terminal of the eleventh switch $S_{11}$. A second terminal of the third switch $S_3$ is electrically connected to a first terminal of the fourth switch $S_4$. A second terminal of the fourth switch $S_4$ is electrically connected to a second terminal of the eighth switch $S_8$, a second terminal of the twelfth switch $S_{12}$ and the negative output terminal of the three-phase single-stage power supply 3. A second terminal of the fifth switch $S_5$ is electrically connected to a first terminal of the sixth switch $S_6$. A second terminal of the seventh switch $S_7$ is electrically connected to a first terminal of the eighth switch $S_8$. A second terminal of the ninth switch $S_9$ is electrically connected to a first terminal of the tenth switch $S_{10}$. A second terminal of the eleventh switch $S_{11}$ is electrically connected to a first terminal of the twelfth switch $S_{12}$.

In some embodiments, the first single-stage conversion module 3a further includes a first output capacitor $C_{o1}$ and a second output capacitor $C_{o2}$. The second single-stage conversion module 3b further includes a third output capacitor $C_{o3}$ and a fourth output capacitor $C_{o4}$. The third single-stage conversion module 3c further includes a fifth output capacitor $C_{o5}$ and a sixth output capacitor $C_{o6}$. The first output capacitor $C_{o1}$ is electrically connected between the first terminal of the first switch $S_1$ and the second terminal of the second switch $S_2$, and the second output capacitor $C_{o2}$ is electrically connected between the first terminal of the third switch $S_3$ and the second terminal of the fourth switch $S_4$. The third output capacitor $C_{o3}$ is electrically connected between the first terminal of the fifth switch $S_5$ and the second terminal of

the sixth switch $S_6$. The fourth output capacitor $C_{o4}$ is electrically connected between the first terminal of the seventh switch $S_7$ and the second terminal of the eighth switch $S_8$. The fifth output capacitor $C_{o5}$ is electrically connected between the first terminal of the ninth switch $S_9$ and the second terminal of the tenth switch $S_{10}$. The sixth output capacitor $C_{o6}$ is electrically connected between the first terminal of the eleventh switch $S_{11}$ and the second terminal of the twelfth switch $S_{12}$.

In some embodiments, the third single-stage conversion module 3c of the three-phase single-stage power supply 3 further includes a first relay $R_{1a}$, an auxiliary inductor $L_a$ and an auxiliary capacitor $C_a$. The first relay $R_{1a}$, the auxiliary inductor $L_a$ and the auxiliary capacitor $C_a$ are connected in series to form a series branch. A first end of the series branch is electrically connected to the second terminal of the eleventh switch $S_{11}$ and the first terminal of the twelfth switch $S_{12}$. A second end of the series branch is electrically connected to the negative output terminal of the three-phase single-stage power supply 3. Through the settings of the first relay $R_{1a}$, the auxiliary inductor $L_a$, the auxiliary capacitor $C_a$, the eleventh switch $S_{11}$ and the twelfth switch $S_{12}$ in the third single-stage conversion module 3c, a buck/boost converter is formed. When the three-phase single-stage power supply 3 receives a single-phase input voltage to operate, the buck/boost converter can compensate for the low-frequency output voltage/output current ripple. To further explain, when the three-phase single-stage power supply 3 receives a single-phase input voltage or receives an unbalanced three-phase input voltage to operate, all switches on the primary side of the third transformer $T_3$ in the third single-stage conversion module 3c and the ninth switch $S_9$ and the tenth switch $S_{10}$ on the secondary side of the third transformer $T_3$ are both disabled.

In some embodiments, the three-phase single-stage power supply 3 further includes an input relay $R_{2a}$ electrically connected between the input terminal of the first single-stage conversion module 3a and the input terminal of the second single-stage conversion module 3b. This input relay $R_{2a}$ helps to configure the AC input of three-phase single-stage power supply 3 from three phase to single phase. When the three-phase single-stage power supply 3 only receives single-phase AC input, for example, at the input of first single-stage conversion module 3a, the input relay $R_{2a}$ is turned on to supply the second single-stage conversion module 3b with the same single-phase AC input voltage as the first single-stage conversion module 3a. This way the first single-stage conversion module 3a and the second single-stage conversion module 3b operate with the same single-phase AC input voltage and perform AC-DC power conversion with the variable switching frequency and delay-time control as described in the prior art. When the AC input of the three-phase single-stage power supply 3 is operated with an unbalanced three-phase input voltage, the first single-stage conversion module 3a, the second single-stage conversion module 3b and the third single-stage conversion module 3c utilize variable switching frequency and delay-time control to perform power factor correction, and the relay $R_{2a}$ is turned off.

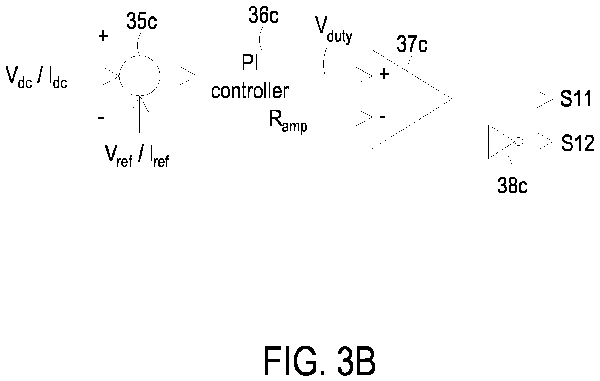

FIG. 3B is a control block diagram of the third single-stage conversion module in the three-phase single-stage power supply of FIG. 3A. The third single-stage conversion module 3c includes a control unit 3d. The control unit 3d includes an adder-subtractor 35c and is configured to compare the sensed output voltage $V_{dc}$ or the output current $I_{dc}$ of the three-phase single-stage power supply 3 with the output voltage reference value $V_{ref}$ or the output current reference value $I_{ref}$ and generate a comparison result. The control unit 3d further includes a proportional-integral (PI) controller 36c connected to the adder-subtractor 35c. The proportional-integral (PI) controller 36c processes the comparison result to generate the duty cycle signal $V_{duty}$. The control unit 3d further includes a comparator 37c connected to the output of proportional-integral (PI) controller 36c. The comparator 37c is configured to compare the duty cycle signal $V_{duty}$ with the fixed frequency pulse width modulation signal ramp $R_{amp}$ to generate switching signals for the eleventh switch $S_{11}$ and the twelfth switch $S_{12}$. The control unit 3d further includes an inverter 38c connected to the comparator 37c. The comparator 37c transmits the switching signal to the twelfth switch $S_{12}$ through the inverter 38c, so the operating states of the eleventh switch $S_{11}$ and the twelfth switch $S_{12}$ are opposite. With the duty cycle control of the eleventh switch $S_{11}$ and the twelfth switch $S_{12}$, the power transmission between the auxiliary capacitor $C_a$ and the equivalent output capacitor formed by the parallel connection of the first to the sixth output capacitors $C_{o1}$, $C_{o2}$, $C_{o3}$, $C_{o4}$, $C_{o5}$, and $C_{o6}$ is controlled to reduce the low-frequency ripple of output current $I_{dc}$ /output voltage Vac.

In some embodiments, the third single-stage conversion module 3c further includes a DC blocking capacitor $C_{3a}$. A first terminal of the DC blocking capacitor $C_{3a}$ is electrically connected to a secondary winding $N_{s3}$ of the third transformer $T_3$. A second terminal of the DC blocking capacitor $C_{3a}$ is electrically connected to the second terminal of the ninth switch $S_9$ and the first terminal of the tenth switch $S_{10}$ in the fifth switch circuit. In addition, the third LLC resonant circuit 33c further includes a resonant capacitor $C_{3b}$ electrically connected between the third inverter circuit 32c and a primary winding $N_{p3}$ of the third transformer $T_3$.

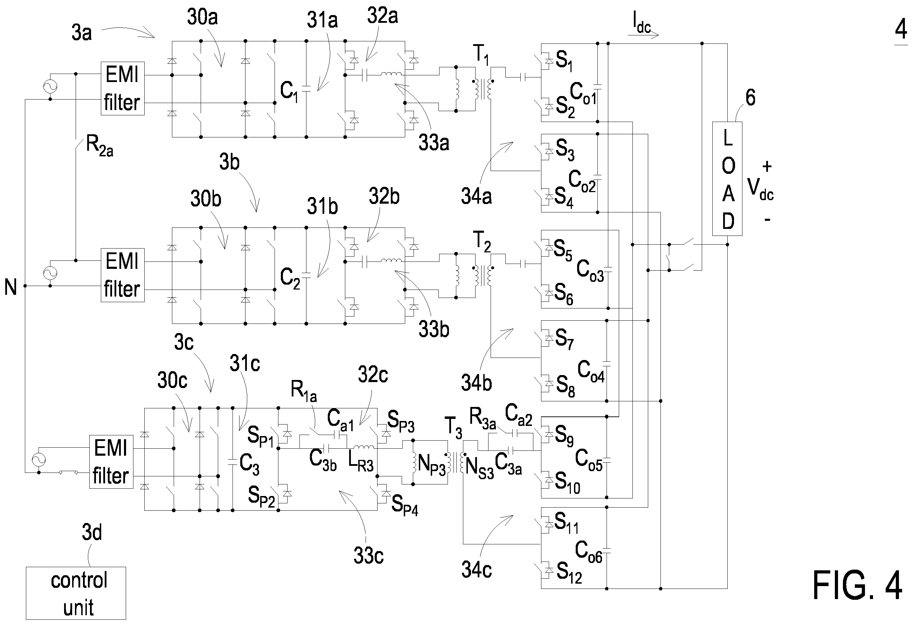

FIG. 4 is a schematic circuit diagram illustrating a three-phase single-stage power supply according to a second embodiment of the present disclosure. In the second embodiment, the circuit topology of the three-phase single-stage power supply 4 is similar to that of the three-phase single-stage power supply 3 of FIG. 3A, wherein elements with same structures and functions are denoted with same symbols, and are not redundantly described herein. Compared with the three-phase single-stage power supply 3 shown in FIG. 3A having the third single-stage conversion module 3c with the first relay $R_{1a}$, the auxiliary inductor $L_a$ and the auxiliary capacitor $C_a$, the third single-stage conversion module 3c of the three-phase single-stage power supply 4 is changed to include a first relay $R_{1a}$, a first auxiliary capacitor $C_{a1}$, a second relay $R_{3a}$ and a second auxiliary capacitor $C_{a2}$. The first relay $R_{1a}$ is electrically connected in series with the first auxiliary capacitor

$C_{a1}$ and then connected in parallel with the resonant capacitor $C_{3b}$ The second relay $R_{3a}$ is electrically connected in series with the second auxiliary capacitor $C_{a2}$ and then connected in parallel with the DC blocking capacitor $C_{3a}$. In addition, a capacitance value of the first auxiliary capacitor $C_{a1}$ is much greater than a capacitance value of the resonant capacitor $C_{3b}$.

When the three-phase single-stage power supply 4 receives a single-phase input voltage to operate, the input relay $R_{2a}$, the first relay $R_{1a}$, and the second relay $R_{3a}$ are enabled and turned on. Since the capacitance value of the first auxiliary capacitor $C_{a1}$ is much greater than the capacitance value of the resonant capacitor $C_{3b}$, the first equivalent capacitance formed by the parallel connection of the first auxiliary capacitor $C_{a1}$ and the resonant capacitor $C_{3b}$ is approximately equal to the first auxiliary capacitor $C_{a1}$. In addition, since the first equivalent capacitance formed by the parallel connection of the first auxiliary capacitor $C_{a1}$ and the resonant capacitor $C_{3b}$ has a larger capacitance value, compared with the impedance of the resonant inductor $L_{R3}$ connected in series with the resonant capacitor $C_{3b}$ in the third LLC resonant circuit 33c, the impedance of the first equivalent capacitor is small and therefore, the effect of the first equivalent capacitor on the operation of the circuit is negligible. In addition, the second auxiliary capacitor $C_{a2}$ and the DC blocking capacitor $C_{3a}$ are electrically connected in parallel to form a second equivalent capacitance. Due to the settings of the second equivalent capacitance, the ninth switch $S_9$, the tenth switch $S_{10}$ and the resonant inductor $L_{R3}$, the third single-stage conversion module 3c can form a buck/boost converter. When the three-phase single-stage power supply 4 receives a single-phase input voltage to operate, the buck/boost converter can compensate the low-frequency output voltage $V_{dc}$/output current $I_{dc}$ ripple generated at the output terminal of the three-phase single-stage power supply 4.

In some embodiments, the third inverter circuit 32c includes a first primary switch $S_{p1}$, a second primary switch $S_{p2}$, a third primary switch $S_{p3}$ and a fourth primary switch $S_{p4}$. The first primary switch $S_{p1}$ and the second primary switch $S_{p2}$ are electrically connected in series to form the first bridge arm. The third primary switch $S_{p3}$ and the fourth primary switch $S_{p4}$ are electrically connected in series to form the second bridge arm.

In addition, during the buck/boost operation of the third single-stage conversion module 3c, the second primary switch $S_{p2}$ and the fourth primary switch $S_{p4}$ of the third inverter circuit 32c and the twelfth switch $S_{12}$ are permanently turned on, and all switches in the third input rectifier circuit 30c, the first primary switch $S_{p1}$, the third primary switch $S_{p3}$ and the eleventh switch $S_{11}$ are permanently turned off. In addition, the control principle of the third single-stage conversion module 3c of the three-phase single-stage power supply 4 in the second embodiment is similar to the control principle shown in FIG. 3B, and is not redundantly described herein.

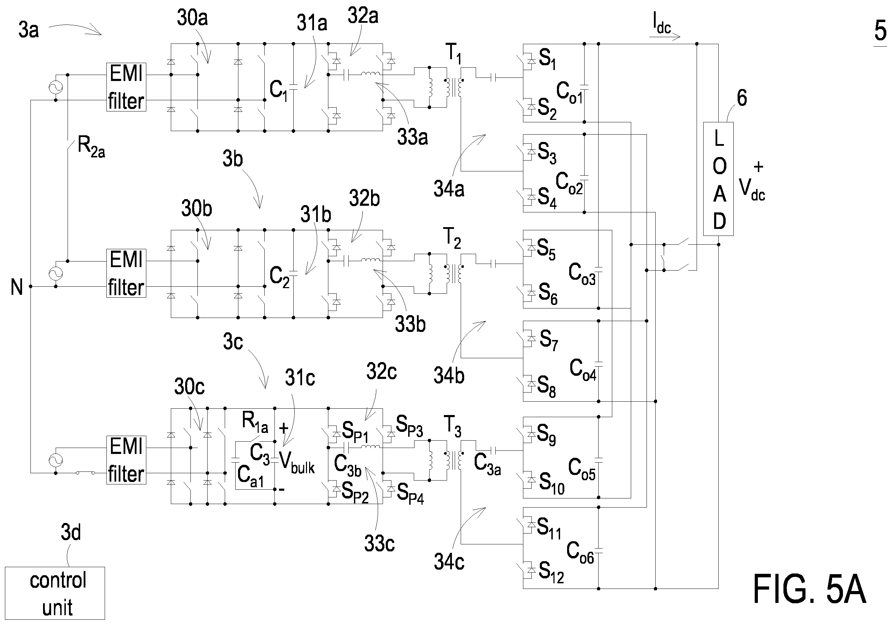

FIG. 5A is a schematic circuit diagram illustrating a three-phase single-stage power supply according to a third embodiment of the present disclosure. In the third embodiment, the circuit topology of the three-phase single-stage power supply 5 is similar to that of the three-phase single-stage power supply 3 of FIG. 3A, wherein elements with same structures and functions are denoted with same symbols, and are not redundantly described herein. Compared with the three-phase single-stage power supply 3 shown in FIG. 3A having the third single-stage conversion module 3c with the first relay $R_{1a}$, the auxiliary inductor $L_a$ and the auxiliary capacitor $C_a$, the third single-stage conversion module 3c of the three-phase single-stage power supply 5 is changed to include a first relay $R_{1a}$ and a first auxiliary capacitor $C_{a1}$. The first relay $R_{1a}$ and the first auxiliary capacitor $C_{a1}$ are electrically connected in series and then connected in parallel with the third input filter circuit 31c.

In the embodiment, the compensation for the low-frequency output voltage/output current ripple generated at the output terminal of the three-phase single-stage power supply 5 is achieved by the operation of the third LLC resonant circuit 33c. The electric energy is transferred from the first output capacitor $C_{o1}$, the second output capacitor $C_{o2}$, the third output capacitor $C_{o3}$, the fourth output capacitor $C_{o4}$, the fifth output capacitor $C_{o5}$ and the sixth output capacitor $C_{o6}$ to an equivalent input capacitance formed by the parallel connection of the first auxiliary capacitor $C_{a1}$ and the input filter capacitor $C_3$ of the third input filter circuit 31c, or the electric energy is transferred from the above equivalent capacitance to the first output capacitor $C_{o1}$, the second output capacitor $C_{o2}$, the third output capacitor $C_{o3}$, the fourth output capacitor $C_{o4}$, the fifth output capacitor $C_{o5}$ and the sixth output capacitor $C_{o6}$. It should be noted that a capacitance value of the first auxiliary capacitor $C_{a1}$ is much greater than a capacitance value of the input filter capacitor $C_3$ of the third input filter circuit 31c, so as to store the electric energy transferred by the equivalent output capacitor formed by parallel connection of the first to sixth output capacitors $C_{o1}$, $C_{o2}$, $C_{o3}$, $C_{o4}$, $C_{o5}$ and $C_{o6}$ when the third single-stage conversion module 3c is used for ripple compensation.

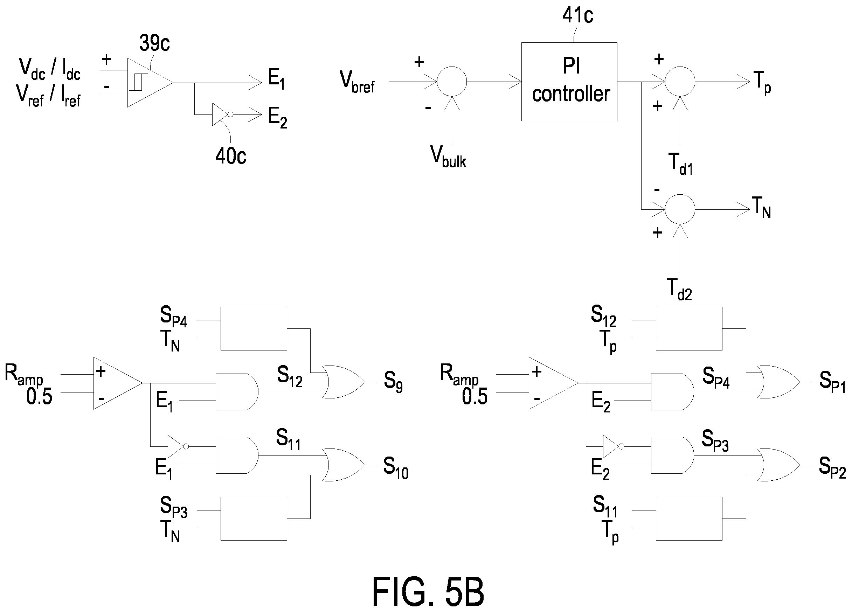

FIG. 5B is a control block diagram of the third single-stage conversion module in the three-phase single-stage power supply of FIG. 5A. When the output voltage $V_{dc}$ or the output current $I_{dc}$ of the three-phase single-stage power supply 5 is greater than the output voltage reference value $V_{ref}$ or the output current reference value $I_{ref}$, the comparator 39c of the control unit of the third single-stage conversion module 3c outputs a first signal $E_1$ at high level. The first signal $E_1$ also passes through the inverter 40c and outputs a second signal $E_2$ at zero level. When the first signal $E_1$ is at a high level, the power must be transferred from the equivalent output capacitor to the equivalent input capacitance. Therefore, the eleventh switch $S_{11}$ and the twelfth switch $S_{12}$ are operated with 50% duty-cycle switching pulse generated by comparing a triangular ramp signal with a DC level of 0.5. Since the second signal $E_2$ is at zero level, the third primary switch $S_{p3}$ and the fourth primary switch $S_{p4}$ of the third inverter circuit 32c are also at zero level. That is, these switches have been disabled during the operation. Since the third primary switch $S_{p3}$ and the fourth primary switch $S_{p4}$ are at zero level, the ninth switch $S_9$ and the tenth switch $S_{10}$ have the same switching pulses as the eleventh switch $S_{11}$ and the twelfth switch $S_{12}$, respectively, due to the OR gate operation. The first primary switch $S_{p1}$ and the second primary switch $S_{p2}$ of the third inverter circuit 32c are operated with a first delay time $T_P$ with respect to the twelfth switch $S_{12}$ and the eleventh switch $S_{11}$, respectively. When the third single-stage conversion module 3c operates at a constant switching frequency, the first delay time $T_P$ controls the amount of power transferred between the equivalent output capacitor to the equivalent input capacitor.

Similarly, when the output voltage $V_{dc}$ or the output current $I_{dc}$ is smaller than or equal to the output voltage reference value $V_{ref}$ or the output current reference value $I_{ref}$, the second signal $E_2$ is at a high level and the first signal $E_1$ is at a zero level. When the second signal $E_2$ is at a high level, the power must be transferred from the equivalent input capacitor to the equivalent output capacitor. Therefore, the third primary switch $S_{p3}$ and the fourth primary switch $S_{p4}$ are operated with 50% duty-cycle switching pulses generated by comparing a triangular ramp signal with a DC level of 0.5. Since the first signal $E_1$ is at zero level, the eleventh switch $S_{11}$ and the twelfth switch $S_{12}$ are also at zero level, i.e., these switches are disabled during operation. Since the eleventh switch $S_{11}$ and the twelfth switch $S_{12}$ are at zero level, therefore, the first primary switch $S_{p1}$ and the second primary switch $S_{p2}$ have the same switching pulses as the fourth primary switch $S_{p4}$ and the third primary switch $S_{p3}$, respectively, due to the OR gate operation. The ninth switch $S_9$ and the tenth switch $S_{10}$ are operated with a second time delay $T_N$ with respect to the fourth primary switch $S_{p4}$ and the third primary switch $S_{p3}$, respectively. The second time delay $T_N$ controls the amount of power transferred from the equivalent input capacitor to the equivalent output capacitor while the third single-stage conversion module 3c operates at a constant switching frequency.

In addition, the power transferred from the equivalent output capacitor to the equivalent input capacitor (depending on the first delay time $T_P$) may not be equal to the amount of the power transferred from the equivalent input capacitor to the equivalent output capacitor (depending on the second delay time $T_N$). This mismatch in the power transferred to the equivalent input capacitor and the power transferred out from the equivalent input capacitor will result in a large deviation in the terminal voltage $V_{bulk}$ across the input filter capacitor $C_3$.

In order to maintain the terminal voltage $V_{bulk}$ across two terminals of the input filter capacitor $C_3$ at the reference level $V_{bref}$, the terminal voltage $V_{bulk}$ must be measured and compared with the reference level $V_{bref}$. Then, the difference between the terminal voltage $V_{bulk}$ and the reference level $V_{bref}$ is controlled through the proportional integral controller 41c. The proportional integral controller 41c controls the first delay time $T_P$ and the second delay time $T_N$ at the first preset value $T_{d1}$ and the second preset value $T_{d2}$, respectively. If the terminal voltage $V_{bulk}$ > the reference level $V_{bref}$, their difference will be negative, which will result in the proportional integral controller 41c to output a negative value, so that the first delay time $T_P$ will decrease and the second delay time $T_N$ will increase. Therefore, the power transferred from the equivalent input capacitor will increase as compared to the power transferred from the equivalent output capacitor to the equivalent input capacitor. This will reduce the terminal voltage $V_{bulk}$. If the terminal voltage $V_{bulk}$ < reference level $V_{bref}$, a similar operation can be explained. That is, the first delay time $T_P$ will increase, and the second delay time $T_N$ will decrease. Furthermore, as shown in FIG. 5B, there is a hysteresis between the operation when the power is transferred from the equivalent output capacitor to the equivalent input capacitor, i.e., when the first signal $E_1$ is at high level, and when the power is transferred from the equivalent input capacitor to the equivalent output capacitor, i.e., when the second signal $E_2$ is at high level. The above-mentioned control method is also applicable to the embodiments as shown in FIG. 3A and FIG. 4.

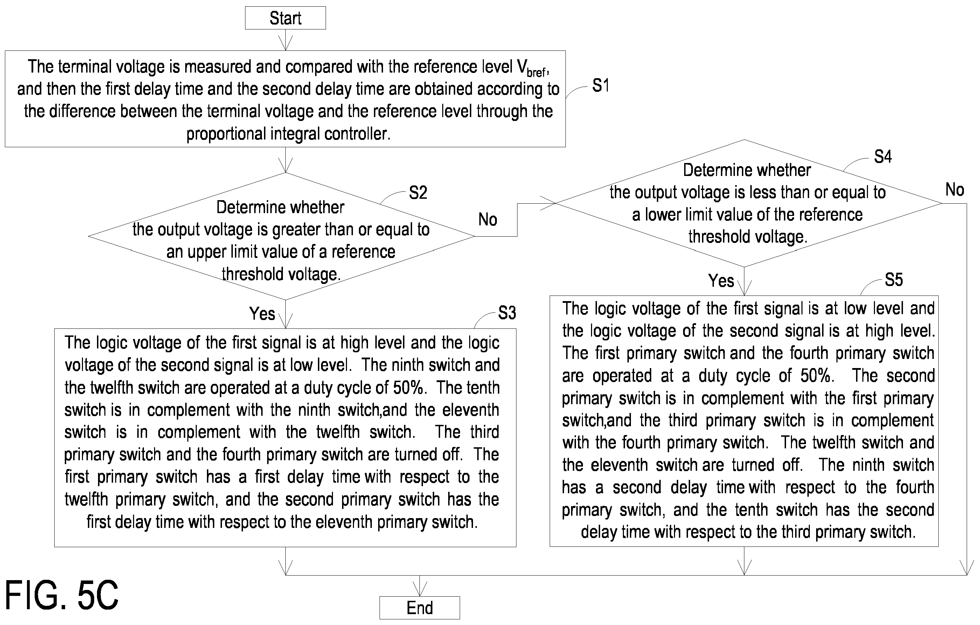

Please refer to FIG. 5C, which is a schematic diagram illustrating the steps of the control method of the third single-stage conversion module of the three-phase single-stage power supply shown in FIG. 5A. First, in step S1, the terminal voltage $V_{bulk}$ is measured and compared with the reference level $V_{bref}$. Then, the first delay time $T_P$ and the second delay time $T_N$ are obtained according to the difference between the terminal voltage $V_{bulk}$ and the reference level $V_{bref}$ through the proportional integral controller 41c. In step S2, it is determined whether the output voltage $V_{dc}$ is greater than or equal to an upper limit value of a reference threshold voltage. In step S3, when the determining result of the step S2 is satisfied, the logic voltage of the first signal $E_1$ is at high level and the logic voltage of the second signal $E_2$ is at low level. The ninth switch $S_9$ and the twelfth switch $S_{12}$ are operated at a duty cycle of 50%. The ninth switch $S_9$ and the tenth switch $S_{10}$ are complementary to each other, and the eleventh switch $S_{11}$ and the twelfth switch $S_{12}$ are complementary to each other. The third primary switch $S_{p3}$ and the fourth primary switch $S_{p4}$ are turned off. The first primary switch $S_{p1}$ has a first delay time $T_P$ with respect to the twelfth switch $S_{12}$, and the second primary switch $S_{p2}$ has a first delay time $T_P$ with respect to the eleventh switch $S_{11}$. In step S4, when the determining result of the step S2 is not satisfied, it is determined whether the output voltage $V_{dc}$ is less than or equal to a lower limit value of the reference threshold voltage. In step S5, when the determining result of the step S4 is satisfied, the logic voltage of the first signal $E_1$ is at low level and the logic voltage of the second signal $E_2$ is at high level. The first primary switch $S_{p1}$ and the fourth primary switch $S_{p4}$ are operated at a duty cycle of 50%. The first primary switch $S_{p1}$ and the second primary switch $S_{p2}$ are complementary to each other, and the third primary switch $S_{p3}$ and the fourth primary switch $S_{p4}$ are complementary to each other. The twelfth switch $S_{12}$ and the eleventh switch $S_{11}$ are turned off. The ninth switch $S_9$ has a second delay time $T_N$ with respect to the fourth primary switch $S_{p4}$, and the tenth switch $S_{10}$ has a second delay time $T_N$ with respect to the third primary switch $S_{p3}$. When the determining result of the step S4 is not satisfied, the control ends.

In addition, as mentioned above, the ripple of the low-frequency output voltage/output current can become relatively large when the three-phase single-stage power supply 2 shown in FIG. 2 is operated with the single-phase input voltage or the unbalanced three-phase input voltage. With a balanced three-phase input voltage source, each single-stage conversion module operates with voltages which are equal in magnitude and two consecutive phases have a phase shift of 120 degrees between them. When the three-phase single-stage power supply 2 operates with the balanced three-phase input voltage, each single-stage conversion module carries one-third of the total output power, and the output voltage/output current ripples of the three single-stage conversion modules are exactly phase-shifted by 120 degrees. In this way, the three-output voltage/output current ripples of the three single-stage conversion modules cancel each other, and the resulting low-frequency output voltage/output current ripple is relatively small. However, with an unbalanced three-phase input voltage, even if each single-stage conversion module carries equal power, the three output voltage/output current ripples of the three single-stage conversion modules may not be exactly phase-shifted by 120 degrees, which results in a large output voltage and output current ripple. In order to reduce the low-frequency output voltage/current ripple, the input admittance of each phase is adjusted individually with a feedback loop.

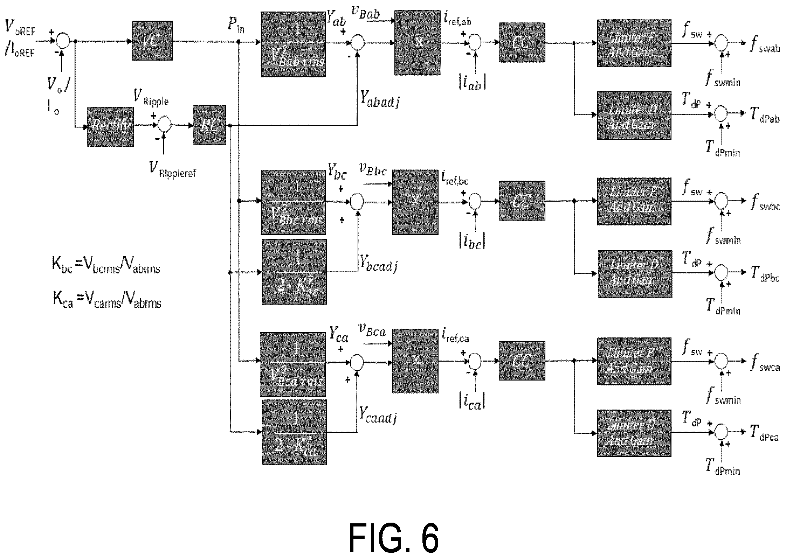

FIG. 6 is a partial control block diagram of the third single-stage conversion module of the three-phase single-stage power supply shown in FIG. 2 when the three-phase single-stage power supply is operated with an unbalanced three-phase input voltage. The three-phase unbalanced input voltages received by the three-phase single-stage power supply 2 are assumed such that ab-phase root mean square $V_{abrms}$>bc-phase root mean square $V_{bcrms}$>ca-phase root mean square $V_{carms}$. In this embodiment, the ripple of the output voltage/output current needs to be compensated and a ripple compensation module is added, which adds or subtracts the adjustments $Y_{abadj}$, $Y_{bcadj}$, $Y_{caadj}$ to the input admittances $Y_{ab}$, $Y_{bc}$, $Y_{ca}$, respectively. The adjustments $Y_{abadj}$, $Y_{bead}$, $Y_{caadj}$ are proportional to the output of the voltage controller VC. In the ripple compensation module, the difference of the output voltage/current reference and the measured output voltage/current is rectified to obtain a ripple comparison value $V_{Ripple}$. The ripple comparison value $V_{Ripple}$ is compared with a reference value $V_{Rippleref}$ which is passed through a ripple compensator RC. The output of the ripple compensator RC is subtracted from the input admittance of the phase which has the largest root mean square value of the input voltage among the three phases, in this example, ab-phase. The output of the ripple compensator RC is multiplied with constants $1/2 \cdot K_{bc}^2$ and $1/2 \cdot K_{bc}^2$ and added to the input admittances of other two phases, in this example, bc-phase and ca-phase, respectively, where $K_{bc}$=(bc-phase root mean square $V_{bcrms}$)/(ab-phase root mean square $V_{abrms}$) and $K_{ca}$=(ca-phase root mean square $V_{carms}$)/(ab-phase root mean square $V_{abrms}$). The input admittances of the three-phases are adjusted in such a way that the total input power Pin of the three phases remains the same compared to that without the adjustments. The total input power with adjustments in input admittances is obtained as shown in the following equation (1):

$$P_{in} = V_{abrms}^2 \cdot (Y_{ab} + Y_{abadj}) + V_{bcrms}^2 \cdot (Y_{bc} + Y_{bcadj}) + V_{carms}^2 \cdot (Y_{ca} + Y_{caadj}) \quad (1)$$

For the total input power Pin to be the same as that without the adjustments in the input admittances, the following equation (2) is used to calculate:

$$V_{abrms}^2 \cdot Y_{abadj} + V_{bcrms}^2 \cdot Y_{bcadj} + V_{carms}^2 \cdot Y_{caadj} = 0 \qquad (2)$$

Substituting $V_{bcrms}$=$K_{bc}$*$V_{abrms}$ and $V_{carms}$=$K_{ca}$*$V_{abrms}$ in (2), the following equation (3) is satisfied if

$Y_{bcadj} = -Y_{abadj} / 2 \cdot K_{bc}^2$ and $Y_{caadj} = -Y_{abadj} / 2 \cdot K_{ca}^2$

$$Y_{abadj} + K_{bc}^2 \cdot Y_{bcadj} + K_{ca}^2 \cdot Y_{caadj} = 0 \qquad (3)$$

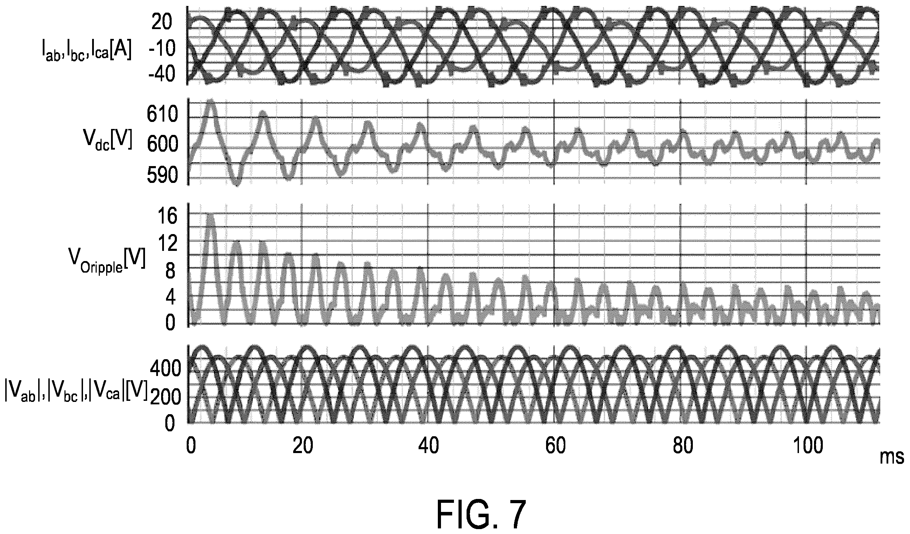

FIG. 7 is a key simulation waveform illustrating the three-phase single-stage power supply shown in FIG. 2. For the three-phase single-stage power supply operating with the three-phase unbalanced input voltage, the initial value of the output voltage ripple $V_{Oripple}$ outputted by the three-phase single-stage power supply is very large, but the output voltage ripple $V_{Oripple}$ can be gradually decreased through the ripple compensator RC by adjusting the input admittance of each single phase in the three-phase system. In FIG. 7, $I_{ab}$, $I_{bc}$ and $I_{ca}$ are the input currents of the first single-stage conversion module, the second single-stage conversion module and the third single-stage conversion module in the three-phase single-stage power supply, respectively, and $V_{ab}$, $V_{bc}$ and $V_{ca}$ are the input voltages of the first single-stage conversion module, the second single-stage conversion module and the third single-stage conversion module in the three-phase single-stage power supply, respectively.

It should be noted that the embodiments mentioned in the present disclosure can be applied to different circuit topologies of any three-phase single-stage power supply.

This present disclosure describes different embodiments and their control for compensating output voltage and current ripple of a three-phase single-stage AC/DC converter when it operates with either single-phase AC input voltage or an unbalanced three-phase AC input voltages. In the present disclosure, the three-phase single-stage AC/DC converter is based on LLC resonant converter. However, same ripple cancellation techniques can be applied to any single-stage AC/DC converters based on dual active bridge (DAB), CLLC, CLLLC, LCL-T or series resonant converter.

In summary, the present disclosure provides a three-phase single-stage power supply. One of the single-stage conversion modules of the three-phase single-stage power supply includes at least one relay and at least one auxiliary capacitor, so that the cooperation of the at least one relay and at least one auxiliary capacitor along with the proposed control is used to reduce the ripple of the low-frequency output voltage/output current when the three-phase single-stage power supply operates with a single-phase input voltage or an unbalanced three-phase input voltage.

**Claims**

1. A three-phase single-stage power supply (3), **characterized by** comprising:

   a positive output terminal;
   a negative output terminal;
   a first single-stage conversion module (3a);
   a second single-stage conversion module (3b); and
   a third single-stage conversion module (3c);
   wherein an output terminal of the first single-stage conversion module (3a), an output terminal of the second single-stage conversion module (3b), and an output terminal of the third single-stage conversion module (3c) are electrically connected in parallel between the positive output terminal and the negative output terminal, wherein the third single-stage conversion module (3c) comprises a third transformer ($T_3$), a third output rectifier circuit (34c), a relay ($R_{1a}$), an auxiliary inductor ($L_a$), and an auxiliary capacitor ($C_a$), wherein the third output rectifier circuit (34c) includes a fifth switch circuit and a sixth switch circuit, the fifth switch circuit and the sixth switch circuit comprise two switches ($S_9$, $S_{10}$, $S_{11}$, $S_{12}$) connected in series, respectively, and the relay ($R_{1a}$), the auxiliary inductor ($L_a$), and the auxiliary capacitor ($C_a$) are connected in series between a midpoint of the two switches ($S_{11}$, $S_{12}$) of the sixth switch circuit and the negative output terminal, so that the third single-stage conversion module (3c) is served as a buck/boost converter.

2. The three-phase single-stage power supply (3) according to claim 1, wherein when the three-phase single-stage power supply (3) receives a single-phase input voltage, all switches on a primary side of the third transformer ($T_3$) and the two switches ($S_9$, $S_{10}$) in the fifth switch circuit of the third single-stage conversion module ($3_C$) are disabled.

3. The three-phase single-stage power supply (3) according to claim 1 or 2, further comprising a control unit (3d), wherein the control unit (3d) comprises:

   an adder-subtractor (35c) configured to compare a sensed output voltage ($V_{dc}$) or a sensed output current ($I_{dc}$) of the three-phase single-stage power supply (3) with an output voltage reference value ($V_{ref}$) or an output current reference value ($I_{ref}$) and generate a comparison result;
   a proportional-integral controller (36c) connected to the adder-subtractor (35c) and configured to generate a duty cycle signal ($V_{duty}$) by processing the comparison result;
   a comparator (37c) connected to an output of the proportional-integral controller (36c) and configured to compare the duty cycle signal ($V_{duty}$) with a fixed frequency pulse width modulation signal ($R_{amp}$) to generate switching signals for the two switches ($S_{11}$, $S_{12}$) of the sixth switch circuit; and
   an inverter (38c) connected to the comparator (37c);

   wherein the comparator (37c) transmits the switching signal to the one of the two switches ($S_{11}$, $S_{12}$) of the sixth switch circuit through the inverter (38c), so the operating states of the two switches ($S_{11}$, $S_{12}$) of the sixth switch circuit are opposite.

4. A three-phase single-stage power supply (4), **characterized by** comprising:

   a positive output terminal;

a negative output terminal;
a first single-stage conversion module (3a);
a second single-stage conversion module (3b); and
a third single-stage conversion module (3c);
wherein an output terminal of the first single-stage conversion module (3a), an output terminal of the second single-stage conversion module (3b) and an output terminal of the third single-stage conversion module (3c) are electrically connected in parallel between the positive output terminal and the negative output terminal, wherein the third single-stage conversion module (3c) comprises an input rectifier circuit (30c), a third inverter circuit (32c), a third LLC resonant circuit (33c), a DC blocking capacitor ($C_{3a}$), a resonant capacitor ($C_{3b}$), a third transformer ($T_3$), a third output rectifier circuit (34c), a first relay ($R_{1a}$), a first auxiliary capacitor ($C_{a1}$), a second relay ($R_{3a}$) and a second auxiliary capacitor ($C_{a2}$), wherein the third output rectifier circuit (34c) includes a fifth switch circuit and a sixth switch circuit, the fifth switch circuit and the sixth switch circuit comprise two switches ($S_9$, $S_{10}$, $S_{11}$, $S_{12}$) connected in series, respectively, the DC blocking capacitor ($C_{3a}$) is electrically connected between a secondary winding ($N_{s3}$) of the third transformer ($T_3$) and a midpoint of the two switches ($S_9$, $S_{10}$) of the fifth switch circuit, a resonant capacitor ($C_{3b}$) of the third LLC resonant circuit (33c) is electrically connected between the third inverter circuit (32c) and a primary winding ($N_{p3}$) of the third transformer ($T_3$), the first relay ($R_{1a}$) is connected in series with the first auxiliary capacitor ($C_{a1}$) and then connected in parallel with the resonant capacitor ($C_{3b}$), and the second relay ($R_{3a}$) is connected in series with the second auxiliary capacitor ($C_{a2}$) and then connected in parallel with the DC blocking capacitor ($C_{3a}$), so that the third single-stage conversion module (3c) performs buck/boost converter operation.

5. The three-phase single-stage power supply (4) according to claim 4, wherein a capacitance value of the first auxiliary capacitor ($C_{a1}$) is greater than a capacitance value of the resonant capacitor ($C_{3b}$).

6. The three-phase single-stage power supply (4) according to claim 4 or 5, wherein when the three-phase single-stage power supply (4) receives a single-phase input voltage or receives an unbalanced three-phase input voltage to operate, the first relay ($R_{1a}$) and the second relay ($R_{3a}$) are conductive.

7. The three-phase single-stage power supply (4) according to any one of claims 4 to 6, wherein the third inverter circuit (32c) comprises a first primary switch ($S_{p1}$), a second primary switch ($S_{p2}$), a third primary switch ($S_{p3}$) and a fourth primary switch ($S_{p4}$), the first primary switch ($S_{p1}$) and the second primary switch ($S_{p2}$) are connected in series to form a first bridge arm, and the third primary switch ($S_{p3}$) and the fourth primary switch ($S_{p4}$) are connected in series to form a second bridge arm, wherein during operation of the third single-stage conversion module (3c) forming the buck/boost converter, the second primary switch ($S_{p2}$), the fourth primary switch ($S_{p4}$) and a lower switch ($S_{12}$) in the sixth switch circuit are permanently turned on, and all switches in the third input rectifier circuit (30c), the first primary switch ($S_{p1}$), the third primary switch ($S_{p1}$) and an upper switch ($S_{11}$) in the sixth switch circuit are permanently turned off.

8. The three-phase single-stage power supply (4) according to any one of claims 4 to 7, further comprising a control unit (3d), wherein the control unit (3d) comprises:

an adder-subtractor (35c) configured to compare a sensed output voltage ($V_{dc}$) or a sensed output current ($I_{dc}$) of the three-phase single-stage power supply (4) with an output voltage reference value ($V_{ref}$) or an output current reference value ($I_{ref}$) and generate a comparison result;
a proportional-integral controller (36c) connected to the adder-subtractor (35c) and configured to allow the comparison result to be proportionally controlled to generate a duty cycle signal ($V_{duty}$);
a comparator (37c) connected to the proportional-integral controller (36c) and configured to compare the duty cycle signal ($V_{duty}$) with a fixed frequency pulse width modulation signal ($R_{amp}$) to generate switching signals for the two switches ($S_9$, $S_{10}$) of the fifth switch circuit; and
an inverter (38c) connected to the comparator (37c);

wherein the comparator (37c) transmits the switching signal to the one of the two switches ($S_9$, $S_{10}$) of the fifth switch circuit through the inverter (38c), so the operating states of the two switches ($S_9$, $S_{10}$) of the fifth switch circuit are opposite.

9. A three-phase single-stage power supply (5), **characterized by** comprising:

a positive output terminal;

a negative output terminal;
a first single-stage conversion module (3a);
a second single-stage conversion module (3b); and
a third single-stage conversion module (3c);
wherein an output terminal of the first single-stage conversion module (3a), an output terminal of the second single-stage conversion module (3b) and an output terminal of the third single-stage conversion module (3c) are connected in parallel between the positive output terminal and the negative output terminal, wherein the third single-stage conversion module (3c) comprises an input rectifier circuit (30c), a third input filter circuit (31c), a third LLC resonant circuit (33c), a first relay ($R_{1a}$) and an auxiliary capacitor ($C_{a1}$), wherein the first relay ($R_{1a}$) and the auxiliary capacitor ($C_{a1}$) are connected in series and then connected in parallel with the third input filter circuit (31c).

10. The three-phase single-stage power supply (5) according to claim 9, wherein the third input filter circuit (31c) comprises an input filter capacitor ($C_3$), and a capacitance value of the auxiliary capacitor ($C_{a1}$) is greater than a capacitance value of the input filter capacitor ($C_3$).

11. The three-phase single-stage power supply (5) according to claim 9 or 10, wherein the third single-stage conversion module (3c) further comprises a third inverter circuit (32c), a third transformer ($T_3$) and a third output rectifier circuit (34c), wherein the third output rectifier circuit (34c) comprises a fifth switch circuit and a sixth switch circuit, the fifth switch circuit comprises a ninth switch ($S_9$) and a tenth switch ($S_{10}$) connected in series, the sixth switch circuit comprises an eleventh switch ($S_{11}$) and a twelfth switch ($S_{12}$) connected in series, wherein a resonant capacitor ($C_{3b}$) of the third LLC resonant circuit (33c) is electrically connected between the third inverter circuit (32c) and a primary winding of the third transformer ($T_3$), wherein the third inverter circuit (32c) comprises a first primary switch ($S_{p1}$), a second primary switch ($S_{p2}$), a third primary switch ($S_{p3}$) and a fourth primary switch ($S_{p4}$), the first primary switch ($S_{p1}$) and the second primary switch ($S_{p2}$) are connected in series to form a first bridge arm, and the third primary switch ($S_{p3}$) and the fourth primary switch ($S_{p4}$) are connected in series to form a second bridge arm.

12. The three-phase single-stage power supply (5) according to any one of claims 9 to 11, further comprising a control unit (3d), wherein when an output voltage ($V_{dc}$) of the three-phase single-stage power supply (5) is greater than or equal to an upper limit value of a reference threshold voltage, the control unit (3d) drives the ninth switch ($S_9$) and the twelfth switch ($S_{12}$) to operate at a duty cycle of 50%, wherein the ninth switch ($S_9$) and the tenth switch ($S_{10}$) are complementary to each other, the eleventh switch ($S_{11}$) and the twelfth switch ($S_{12}$) are complementary to each other, the third primary switch ($S_{p3}$) and the fourth primary switch ($S_{p4}$) are turned off, the first primary switch ($S_{p1}$) has a first delay time ($T_P$) with respect to the twelfth switch ($S_{12}$), and the second primary switch ($S_{p2}$) has the first delay time (Tp) with respect to the eleventh switch ($S_{11}$).

13. The three-phase single-stage power supply (5) according to claim 12, wherein when the output voltage ($V_{dc}$) is less than or equal to a lower limit value of the reference threshold voltage, the control unit (3d) drives the first primary switch ($S_{p1}$) and the fourth primary switch ($S_{p4}$) to operate at a duty cycle of 50%, wherein the first primary switch ($S_{p1}$) and the second primary switch ($S_{p2}$) are complementary to each other, the third primary switch ($S_{p3}$) and the fourth primary switch ($S_{p4}$) are complementary to each other, the twelfth switch ($S_{12}$) and the eleventh switch ($S_{11}$) are turned off, the ninth switch ($S_9$) has a second delay time ($T_N$) with respect to the fourth primary switch ($S_{p4}$), and the tenth switch ($S_{10}$) has the second delay time ($T_N$) with respect to the third primary switch ($S_{p3}$).

14. The three-phase single-stage power supply (3, 4, 5) according to any one of claims 1, 4 and 9, further comprising a control unit (3d), wherein a terminal voltage ($V_{bulk}$) of an input filter capacitor ($C_3$) is compared with a reference level ($V_{bref}$) by the control unit (3d), and the first delay time ($T_P$) and the second delay time ($T_N$) are controlled at a first preset value and a second preset value according to the comparing result, wherein when the terminal voltage ($V_{bulk}$) of the input filter capacitor ($C_3$) is greater than the reference level ($V_{bref}$), the control unit (3d) controls the first delay time (Tp) to decrease and the second delay time ($T_N$) to increase, wherein when the terminal voltage ($V_{bulk}$) of the input filter capacitor ($C_3$) is less than the reference level ($V_{bref}$), the control unit (3d) controls the first delay time (Tp) to increase and the second delay time ($T_N$) to decrease.

15. The three-phase single-stage power supply (3, 4, 5) according to any one of the above claims, wherein the first single-stage conversion module (3a), the second single-stage conversion module (3b), and the third single-stage conversion module (3c) comprise an input admittance respectively, and the three-phase single-stage power supply (3, 4, 5) comprises a ripple compensation module, wherein when the three-phase single-stage power supply (3, 4, 5) is operated with an unbalanced three-phase input voltage, a difference of an output voltage and an output voltage reference value or a difference of an output current and an output current reference value is rectified by the ripple compensation module to obtain a ripple comparison value ($V_{Ripple}$), wherein the ripple compensation module compares the ripple comparison value ($V_{Ripple}$) with a ripple reference value ($V_{Rippleref}$) and adjusts the respective input admittance of the first single-stage conversion module (3a), the second single-stage conversion module (3b) and the third single-stage conversion module (3c) according to the comparing result of the ripple comparison value ($V_{Ripple}$) and the ripple reference value ($V_{Rippleref}$) to reduce ripple of the output voltage and the output current.

16. The three-phase single-stage power supply (3, 4, 5) according to any one of the above claims, further comprising an input relay ($R_{2a}$) electrically connected between an input terminal of the first single-stage conversion module (3a) and an input terminal of the second single-stage conversion module (3b).

FIG. 1 PRIOR ART

FIG. 2 PRIOR ART

FIG. 3A

FIG. 3B

FIG. 4

FIG. 5A

FIG. 5B

Start

The terminal voltage is measured and compared with the reference level V_bref, and then the first delay time and the second delay time are obtained according to the difference between the terminal voltage and the reference level through the proportional integral controller. — S1

Determine whether the output voltage is greater than or equal to an upper limit value of a reference threshold voltage. — S2

No

Determine whether the output voltage is less than or equal to a lower limit value of the reference threshold voltage. — S4

No

Yes

The logic voltage of the first signal is at high level and the logic voltage of the second signal is at low level. The ninth switch and the twelfth switch are operated at a duty cycle of 50%. The tenth switch is in complement with the ninth switch,and the eleventh switch is in complement with the twelfth switch. The third primary switch and the fourth primary switch are turned off. The first primary switch has a first delay time with respect to the twelfth primary switch, and the second primary switch has the first delay time with respect to the eleventh primary switch. — S3

Yes

The logic voltage of the first signal is at low level and the logic voltage of the second signal is at high level. The first primary switch and the fourth primary switch are operated at a duty cycle of 50%. The second primary switch is in complement with the first primary switch,and the third primary switch is in complement with the fourth primary switch. The twelfth switch and the eleventh switch are turned off. The ninth switch has a second delay time with respect to the fourth primary switch, and the tenth switch has the second delay time with respect to the third primary switch. — S5

FIG. 5C

End

EP 4 664 740 A1

FIG. 6

FIG. 7

Europäisches
Patentamt

European
Patent Office

Office européen
des brevets

# EUROPEAN SEARCH REPORT

**Application Number**

EP 25 18 2708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM HYUNGJIN ET AL: "A Single-Stage Electrolytic Capacitor-Less EV Charger With Single- and Three-Phase Compatibility", IEEE TRANSACTIONS ON POWER ELECTRONICS, INSTITUTE OF ELECTRICAL AND ELECTRONICS ENGINEERS, USA, vol. 37, no. 6, 15 November 2021 (2021-11-15), pages 6780-6791, XP011900708, ISSN: 0885-8993, DOI: 10.1109/TPEL.2021.3127010 [retrieved on 2022-02-15] | 1-3,16 | INV. H02M1/00 H02M1/10 H02M1/14 H02M1/15 H02M3/00 H02M3/335 |
| Y | * figure 3 * | 9-13 | |
| A | * figures 9-12 * * page 6781 * * page 6783 - page 6784 * | 4-8,14, 15 | |
| X | CHAURASIYA SARAN ET AL: "A 22kW OBC with Isolated DC/DC Converter with Bidirectional Power Flow for Electric Automobiles", 2024 IEEE THIRD INTERNATIONAL CONFERENCE ON POWER ELECTRONICS, INTELLIGENT CONTROL AND ENERGY SYSTEMS (ICPEICES), IEEE, 26 April 2024 (2024-04-26), pages 660-665, XP034732946, DOI: 10.1109/ICPEICES62430.2024.10719217 [retrieved on 2024-10-23] | 4,5,8, 14,15 | TECHNICAL FIELDS SEARCHED (IPC) H02M |
| Y | * figure 2 * | 9-13 | |
| A | * figure 4 * | 1-3,6,7, 16 | |

-----

-/--

The present search report has been drawn up for all claims

| Place of search | Date of completion of the search | Examiner |
|---|---|---|
| The Hague | 6 October 2025 | Riehl, Philippe |

EPO FORM 1503 03.82 (P04C01)

Europäisches Patentamt
European Patent Office
Office européen des brevets

## EUROPEAN SEARCH REPORT

**Application Number**

EP 25 18 2708

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DO BA PHU ET AL: "Single-Phase and Three-Phase Compatible SingleStage OBC with 6-switches Secondary Side", 2024 IEEE 10TH INTERNATIONAL POWER ELECTRONICS AND MOTION CONTROL CONFERENCE (IPEMC2024-ECCE ASIA), IEEE, 17 May 2024 (2024-05-17), pages 1908-1912, XP034629080, DOI: 10.1109/IPEMC-ECCEASIA60879.2024.10567664 [retrieved on 2024-07-02] * figure 1 * * figures 4-5 * * page 1909 - page 1910 * ----- | 1-16 | |
| A | LIU JIAYUN ET AL: "A Three-phase Single-Stage Dual-Active-Bridge AC-DC Converter With Single-phase Operation Capability", 2024 IEEE 10TH INTERNATIONAL POWER ELECTRONICS AND MOTION CONTROL CONFERENCE (IPEMC2024-ECCE ASIA), IEEE, 17 May 2024 (2024-05-17), pages 717-721, XP034628931, DOI: 10.1109/IPEMC-ECCEASIA60879.2024.10567078 [retrieved on 2024-07-02] * figure 1 * * figure 6 * ----- | 1-16 | **TECHNICAL FIELDS SEARCHED (IPC)** |

The present search report has been drawn up for all claims

| Place of search | Date of completion of the search | Examiner |
|---|---|---|
| The Hague | 6 October 2025 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)